# EUROPEAN PATENT SPECIFICATION

(11) **EP 3 656 659 B1**
(45) Date of publication and mention of the grant of the patent: **23.06.2021**
(21) Application number: 18382833.4
(22) Date of filing: 20.11.2018
(51) Int. Cl.: B64C 9/00, B64C 9/30

(54) **A MOVABLE CONTROL SURFACE FOR AN AIRCRAFT AND MANUFACTURING METHOD THEREOF**
BEWEGLICHE STEUERUNGSOBERFLÄCHE FÜR EIN FLUGZEUG UND HERSTELLUNGSVERFAHREN DAFÜR
SURFACE DE COMMANDE MOBILE POUR AÉRONEF ET SON PROCÉDÉ DE FABRICATION

(43) Date of publication of application: 27.05.2020
(73) Proprietor: Airbus Operations, S.L., 28906 Getafe (ES)
(72) Inventor: BALSA GONZÁLEZ, Alberto, 28906 Getafe (ES); SANCHEZ RUIZ, Juan Antonio, 28906 Getafe (ES); MENDEZ RODRIGUEZ, Miguel Angel, 28906 Getafe (ES); KOBIERECKI, Robert, 28906 Getafe (ES)

(56) References cited:
- EP-A1- 3 378 766
- US-A- 2 238 403
- US-A- 2 567 124
- US-A1- 2010 258 680
- Anonymous: "Balance Weights and Ballast for Aerospace | Wolfmet", , 29 June 2017 (2017-06-29), XP055572700, Retrieved from the Internet: URL:https://web.archive.org/web/2017062911 5640/https://www.wolfmet.com/applications/ balance-weights-and-ballast/aerospace/ [retrieved on 2019-03-21]

## Description

### Object of the invention

The present invention refers to a movable control surface for an aircraft, in particular, for ailerons, elevators or rudders.

More in particular, it is an object of the present invention to provide a movable control surface for an aircraft that is capable of preventing flutter without the addition of external auxiliary ballasts, in order to achieve savings in cost and minimize weight.

The invention also refers to a method for manufacturing such a structure.

### Background of the invention

Flutter is a dangerous phenomenon to aircraft control. Any surface on an aircraft which is exposed to air flow can experience flutter, but the most common type of flutter involves the control surfaces such as ailerons, elevators, and rudders. The mass properties of these control surfaces are critical and have to be measured with care to minimize flutter.

If the center of gravity of a control surface assembly is not located exactly on the hinge line, then a torque will be applied to the control surface whenever the wing (or other mounting surface) accelerates in a vertical direction. If the inertial forces acting through the center of gravity of a control surface amplify the vibration of a wing, then the flutter amplitude will rapidly increase and can result in a high damage in aircraft structures.

The moment of inertia of the control surface is also a critical parameter. It is necessary for control surface moment of inertia to fall within a narrow range of values, in order to avoid flutter problems.

Protections against flutter are typically limiting the flight envelope, increase the damping, or increase the stiffness of the structure. For this last solution, ballasts are currently installed as dead masses either on fixed structures, such as in the torsion box, or in movable structures, such as ailerons, elevators or rudders.

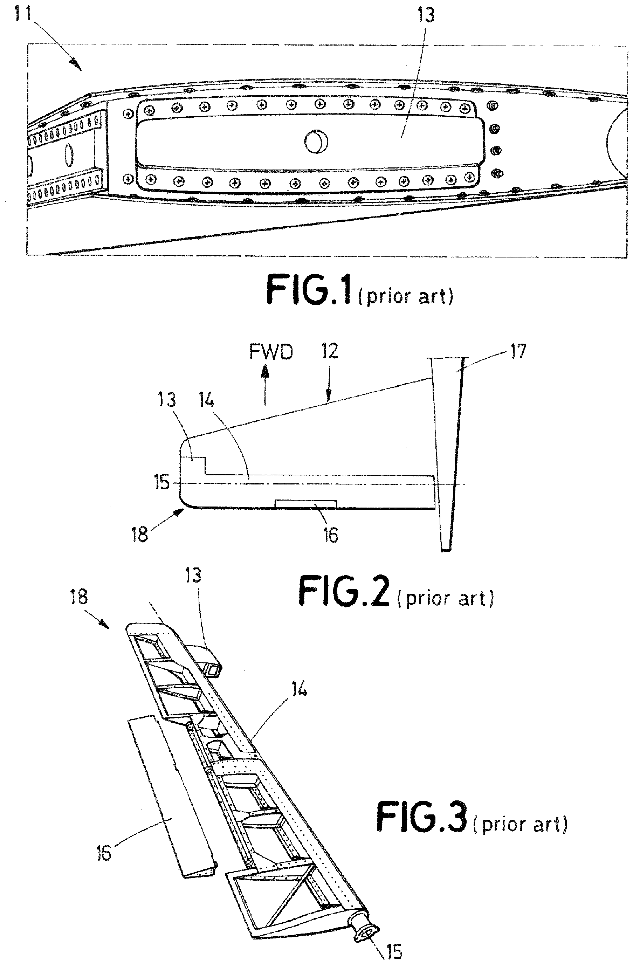

Figure 1 shows a state of the art torsion box 11 provided with ballasts 13 in two of its sides.

Ballasts are usually located so as to bring the center of gravity on, or even ahead of the hinge line of the control surfaces in order to limit gust loads and suppress flutter. For that, as shown in Figures 2 and 3, ballasts are usually designed as horns extending towards the forward direction of the aircraft. Specifically, Figures 2 and 3 show a state of the art elevator 18, to which a ballast 13 is attached at its leading edge 14, ahead of the elevator hinge line 15. Figure 2 shows a top view of the elevator 18 provided with a tab 16, and attached to an HTP 12 connected to the fuselage 17 to allow its trimming.

Every external ballast requires to be mounted and installed in a structure by riveting/bolted methods, adding weight and complexity.

Further, ballasts installation require searches for locations, kinematics studies and installation activities, but even though, not always can be installed in the best locations since sometimes their installation is affected by geometrical limitations, ergonomic issues, and/or clashes due to kinematics of control surfaces movement, decreasing its effectiveness and increasing, consequently, the weight necessary to achieve the desired effect.

State of art ballasts are made from medium density materials such as irons, steels and similar.

Document US2567124 describes an airfoil that may be built up of sheet metal sections fabricated in such a manner that ordinary rivets or other usual fastening means may be employed throughout. The aft portion of the airfoil preferably comprises a sheet of metal bent upon itself at the trailing edge to constitute the upper and lower covering or skin. To this aft section are progressively secured fore sections of the airfoil, access to the inner ends of rivets or other fastening means being gained through the forward open face of the structure, whose leading edge is finally closed by a nose cap.

Document US2010258680 describes an elongated, torsion-deformable aerodynamic element, in which the upper surface is continuous while the lower surface comprises a longitudinal slot in the direction of the span and in the vicinity of the leading edge. Furthermore, an actuator device inside said aerodynamic element is capable of sliding the edges of the slot relative to each other.

Therefore, it would be desirable to provide technical means that reduces flutter in movable control surfaces at the same time that reduce the weight, cost, and complexity that are traditionally required.

### Summary of the invention

The present invention overcomes the above mentioned drawbacks by providing a movable control surface for an aircraft that reduces flutter and saves weight and cost.

One aspect of the present invention refers to a movable control surface for an aircraft, having a hinge line for rotation and comprising at least one composite layer, and at least one sheet having a density of at least 10 g/cm³ laid over the at least one composite layer. The sheet is extended along the wingspan of the control surface ahead of hinge line, covering the outermost area of the leading edge of the control surface. Thus, the sheet brings the center of gravity of control surface to the hinge line avoiding flutter issues, at the same time that ensures a good reduction of flutter in the control surface where extra weight of ballast is required.

This way, the invention provides a new movable control surface with an integrated ballast, since at least one sheet of very high density material is included in the surface. This sheet adds weight in a simplified way in comparison with traditional techniques, in which a search for appropriate location and riveting techniques have to be performed.

Embedding the sheet in the surface also saves costs since no additional parts are required for the installation of the new ballasts.

Further, the use of high density sheets embedded in existing parts maximize ballast effectiveness setting the weight exactly where it is needed.

According to a preferred embodiment, the movable control surface further comprises a leading edge, and the at least one sheet is extended at a distance lower than 10% of the chord length starting from the leading edge of the control surface.

Locating the at least one sheet at a distance lower than 10% of the chord length starting from the leading edge of the control surface, ensures that the center of gravity is brought on or even ahead of the line of the control surface. This way, gust loads are limited and flutter is suppressed.

According to another preferred embodiment, an elevator consists of a movable control surface as described above.

According to another preferred embodiment, a rudder consists of a movable control surface as described above.

According to another preferred embodiment, an aileron consists of a movable control surface as described above.

Another aspect of the invention refers to a method for manufacturing a movable control surface for an aircraft, comprising the steps of providing at least one layer of composite material, providing at least one sheet of having a density of at least 10 g/cm³, laying the sheet over the at least one composite layer extending it along the wingspan of the control surface, ahead of the hinge line of the movable control surface.

The method of the invention provides a simple and cost-effective way of producing a movable control surface provided with an integrated ballast designed to reduce flutter. Additionally, the method reduces the time traditionally required for installing the ancillary ballasts, entailing a reduction in cost and weight.

### Brief description of the drawings

For a better comprehension of the invention, the following drawings are provided for illustrative and non-limiting purposes, wherein:
Figure 1 shows a perspective view of a state of the art torsion box provided with ballasts.
Figure 2 shows a top view of an HTP provided with a state of the art elevator.
Figure 3 shows a schematic perspective view of a state of the art elevator.
Figure 4 shows a view of an aircraft structure provided with a movable control surface, according to a first embodiment of the present invention.
Figure 5 shows a detailed view of the movable control surface of Figure 4.
Figure 6 shows a partial view of a movable control surface of the invention. Drawing A shows a perspective view of the surface. Drawing B shows a cross-sectional view along the axis A-A' of drawing A.
Figure 7 shows a schematic cross-sectional view of the arrangement of the at least one sheet of very high density material between two composite layers to form the movable control surface, according to a second embodiment of the present invention.
Figure 8 shows an aircraft equipped with elevators, ailerons and a rudder as described.

### Preferred embodiments of the invention

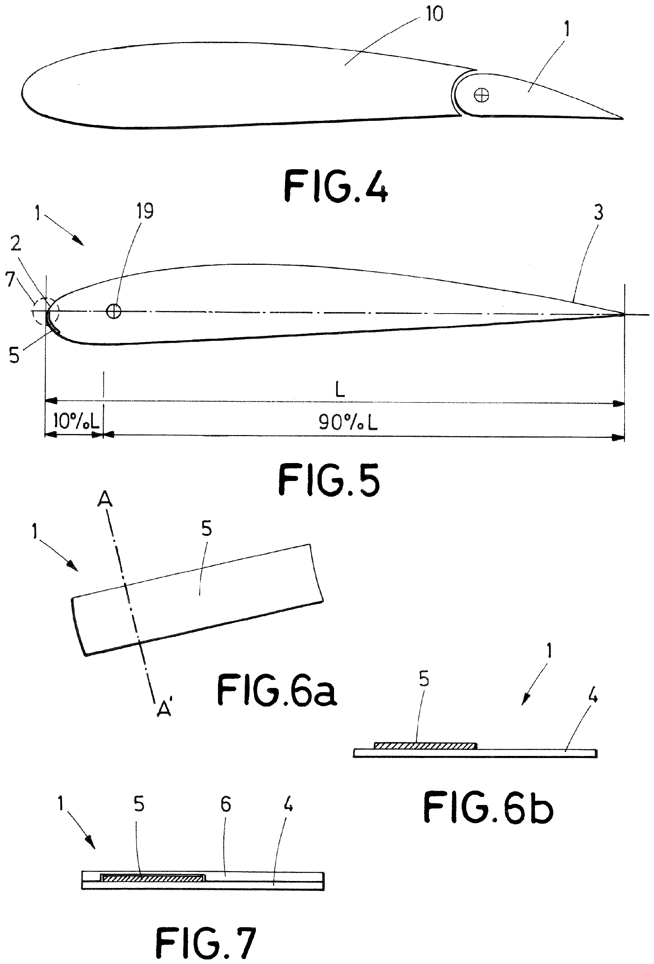

Figure 4 shows an aircraft structure 10, equipped with a movable control surface 1 according to a first preferred embodiment.

As shown in detail in Figure 5, the movable control surface 1 has a hinge line 19, a leading edge 2 and a trailing edge 3, and comprises at least one composite layer 4, 6 (see Figures 6b and 7). According to the invention, the movable control surface 1 further comprises at least one sheet 5 of very high density material (at least 10 g/cm³) laid over the at least one composite layer 4, 6, wherein the sheet 5 is extended along the wingspan of the control surface 1 ahead of the hinge line 19, in order to transfer the center of gravity of control surface 1 to the hinge line 19 to thus suppress flutter.

Laying at least one very high density material sheet 5 over the at least one composite layer 4, 6, provides a movable control surface 1 with an integrated ballast. The integration reduces installation time, together with cost and weight related with traditional installation, which conventionally involves riveted and/or bolted joints.

As shown in Figure 5, the sheet 5 is preferably located at a distance lower than 10% of the chord length (L) starting from the leading edge 2.

Further, the sheet 5 is placed to cover the outermost area 7 of the leading edge 2 of the control surface 1 in order to ensure a good reduction of flutter in the control surface where extra weight of ballast is required.

Preferably, the at least one sheet 5 comprises at least one of the following materials: tungsten, molybdenum and silver. These materials have the adequate density to serve as ballast for the control surface.

Figures 6a and 6b respectively show a perspective and a cross-sectional view of a movable control surface 1 of the invention. As shown and according to another preferred embodiment, the at least one sheet 5 is placed on top of the control surface 1 forming its outermost layer.

Figure 7 shows a cross-sectional view of a movable control surface 1 according to another preferred embodiment of the invention. According to an alternative embodiment, the at least one sheet 5 is embedded between at least two composite layers 4, 6.

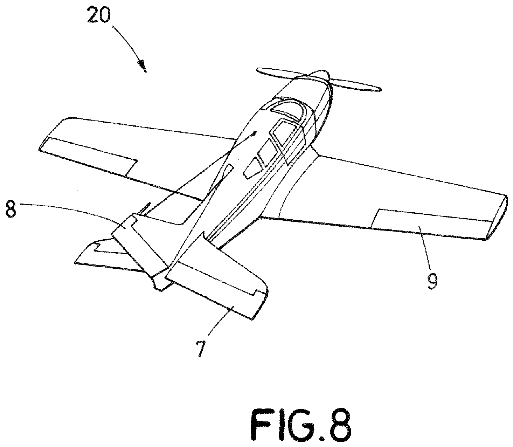

Figure 8 shows an aircraft 20 equipped with elevators 7, ailerons 9 and a rudder 8 as described.

## Claims

1. A movable control surface (1) for an aircraft, having a hinge line (19) for rotation, and comprising at least one composite layer (4, 6), and at least one sheet (5) having a density of at least 10 g/cm³ laid over the at least one composite layer (4, 6), wherein the sheet (5) is extended along the wingspan of the control surface (1) ahead of the hinge line (19) covering the outermost area (7) of the leading edge (2) of the control surface (1).

2. A movable control surface (1) for an aircraft, according to claim 1, further comprising a leading edge (2), wherein the at least one sheet (5) is extended at a distance lower than 10% of the chord length (L) starting from the leading edge (2) of the control surface (1).

3. A movable control surface (1) for an aircraft, according to any of the preceding claims, wherein the at least one sheet (5) comprises at least one of the following materials: tungsten, molybdenum and silver.

4. A movable control surface (1) for an aircraft, according to any of the preceding claims, wherein the at least one sheet (5) is embedded between at least two composite layers (4, 6).

5. A movable control surface (1) for an aircraft, according to any of claims 1 to 3, wherein the at least one sheet (5) is placed on top of the control surface (1) forming its outermost layer.

6. An elevator (7) for an aircraft, comprising a movable control surface (1) according to any of the preceding claims.

7. A rudder (8) for an aircraft, comprising a movable control surface (1) according to any of claims 1 to 5.

8. An aileron (9) for an aircraft, comprising a movable control surface (1) according to any of claims 1 to 5.

9. Method for manufacturing a movable control surface (1) for an aircraft, comprising the steps of:
providing at least one layer of composite material (4),
providing at least one sheet (5) having a density of at least 10 g/cm³,
laying the sheet (5) over the at least one composite layer (4, 6) extending it along the wingspan of the control surface (1) ahead of the hinge line (19) of the movable control surface (1), covering the outermost area (7) of the leading edge (2) of the control surface (1).

10. Method according to claim 9, wherein the sheet (5) is extended at a distance lower than 10% of the chord length (L) starting from the leading edge (2) of the control surface (1).

11. Method according to any of claims 9-10, wherein the at least one sheet (5) comprises at least one of the following materials: tungsten, molybdenum and silver.

12. Method according to any of claims 9-11, further comprising providing a second layer of composite material (6), and laying said second layer of composite material (6) over the sheet (5) to embed it between composite layers (4, 6) of the control surface (1).

## Patentansprüche

1. Bewegliche Steuerungsoberfläche (1) für ein Flugzeug, mit einer Anlenklinie (19) zur Drehung, und umfassend zumindest eine Verbundschicht (4, 6) und zumindest eine Platte (5) mit einer Dichte von mindestens 10 g/cm³, die über die zumindest eine Verbundschicht (4, 6) gelegt ist, wobei sich die Platte (5) entlang der Flügelspanne der Steuerungsoberfläche (1) vor der Anlenklinie (19) erstreckt, den äußersten Bereich (7) der Vorderkante (2) der Steuerungsoberfläche (1) abdeckend.

2. Bewegliche Steuerungsoberfläche (1) für ein Flugzeug nach Anspruch 1, ferner umfassend eine Vorderkante (2), wobei sich die zumindest eine Platte (5) bei einem Abstand von weniger als 10 % der Sehnenlänge (L) erstreckt, beginnend bei der Vorderkante (2) der Steuerungsoberfläche (1).

3. Bewegliche Steuerungsoberfläche (1) für ein Flugzeug nach einem der vorhergehenden Ansprüche, wobei die zumindest eine Platte (5) zumindest eines der folgenden Materialien umfasst: Wolfram, Molybdän und Silber.

4. Bewegliche Steuerungsoberfläche (1) für ein Flugzeug nach einem der vorhergehenden Ansprüche, wobei die zumindest eine Platte (5) zwischen mindestens zwei Verbundschichten (4, 6) eingebettet ist.

5. Bewegliche Steuerungsoberfläche (1) für ein Flugzeug nach einem der Ansprüche 1 bis 3, wobei die zumindest eine Platte (5) oben auf der Steuerungsoberfläche (1) platziert ist, ihre äußerste Schicht bildend.

6. Höhenruder (7) für ein Flugzeug, umfassend eine bewegliche Steuerungsoberfläche (1) nach einem der vorhergehenden Ansprüche.

7. Seitenruder (8) für ein Flugzeug, umfassend eine bewegliche Steuerungsoberfläche (1) nach einem der Ansprüche 1 bis 5.

8. Querruder (9) für ein Flugzeug, umfassend eine bewegliche Steuerungsoberfläche (1) nach einem der Ansprüche 1 bis 5.

9. Verfahren zur Herstellung einer beweglichen Steuerungsoberfläche (1) für ein Flugzeug, das die folgenden Schritte umfasst:
Bereitstellen zumindest einer Schicht von Verbundwerkstoff (4),
Bereitstellen zumindest einer Platte (5) mit einer Dichte von mindestens 10 g/cm³,
Legen der Platte (5) über die zumindest eine Verbundschicht (4, 6), sich entlang der Flügelspanne der Steuerungsoberfläche (1) vor der Anlenklinie (19) der beweglichen Steuerungsoberfläche (1) erstreckend, den äußersten Bereich (7) der Vorderkante (2) der Steuerungsoberfläche (1) abdeckend.

10. Verfahren nach Anspruch 9, wobei sich die Platte (5) bei einem Abstand von weniger als 10 % der Sehnenlänge (L) erstreckt, beginnend bei der Vorderkante (2) der Steuerungsoberfläche (1).

11. Verfahren nach einen der Ansprüche 9-10, wobei die zumindest eine Platte (5) zumindest eines der folgenden Materialien umfasst: Wolfram, Molybdän und Silber.

12. Verfahren nach einem der Ansprüche 9-11, ferner umfassend Bereitstellen einer zweiten Schicht von Verbundwerkstoff (6) und Legen der zweiten Schicht von Verbundwerkstoff (6) über die Platte (5), um diese zwischen Verbundschichten (4, 6) der Steuerungsoberfläche (1) einzubetten.

## Revendications

1. Surface de commande mobile (1) pour un aéronef, ayant un axe d'articulation (19) pour la rotation, et comprenant au moins une couche composite (4, 6), et au moins une feuille (5) ayant une densité d'au moins 10 g/cm³ disposée sur l'au moins une couche composite (4, 6), dans laquelle la feuille (5) est étendue le long de l'envergure de la surface de commande (1) devant l'axe d'articulation (19) pour couvrir la zone la plus à l'extérieur (7) du bord d'attaque (2) de la surface de commande (1).

2. Surface de commande mobile (1) pour un aéronef selon la revendication 1, comprenant en outre un bord d'attaque (2), dans laquelle l'au moins une feuille (5) est étendue sur une distance inférieure à 10 % de la longueur de corde (L) à partir du bord d'attaque (2) de la surface de commande (1).

3. Surface de commande mobile (1) pour un aéronef selon l'une quelconque des revendications précédentes, dans laquelle l'au moins une feuille (5) comprend au moins l'un des matériaux suivants : tungstène, molybdène et argent.

4. Surface de commande mobile (1) pour un aéronef selon l'une quelconque des revendications précédentes, dans laquelle l'au moins une feuille (5) est intégrée entre au moins deux couches composites (4, 6).

5. Surface de commande mobile (1) pour un aéronef selon l'une quelconque des revendications 1 à 3, dans laquelle l'au moins une feuille (5) est placée par-dessus la surface de commande (1) pour former sa couche la plus à l'extérieur.

6. Gouverne de profondeur (7) pour un aéronef, comprenant une surface de commande mobile (1) selon l'une quelconque des revendications précédentes.

7. Gouverne de direction (8) pour un aéronef, comprenant une surface de commande mobile (1) selon l'une quelconque des revendications 1 à 5.

8. Aileron (9) pour un aéronef, comprenant une surface de commande mobile (1) selon l'une quelconque des revendications 1 à 5.

9. Procédé de fabrication d'une surface de commande mobile (1) pour un aéronef, comprenant les étapes consistant à :
fournir au moins une couche de matériau composite (4),
fournir au moins une feuille (5) ayant une densité d'au moins 10 g/cm³,
disposer la feuille (5) sur l'au moins une couche composite (4, 6) s'étendant le long de l'envergure de la surface de commande (1) devant l'axe d'articulation (19) de la surface de commande mobile (1), pour couvrir la zone la plus à l'extérieur (7) du bord d'attaque (2) de la surface de commande (1).

10. Procédé selon la revendication 9, dans lequel la feuille (5) est étendue sur une distance inférieure à 10 % de la longueur de corde (L) à partir du bord d'attaque (2) de la surface de commande (1).

11. Procédé selon l'une quelconque des revendications 9 à 10, dans lequel l'au moins une feuille (5) comprend au moins l'un des matériaux suivants : tungstène, molybdène et argent.

12. Procédé selon l'une quelconque des revendications 9 à 11, comprenant en outre la fourniture d'une deuxième couche de matériau composite (6), et la disposition de ladite deuxième couche de matériau composite (6) sur la feuille (5) pour l'intégrer entre des couches composites (4, 6) de la surface de commande (1).
